# EUROPEAN PATENT APPLICATION

(11) **EP 1 582 768 A2**
(43) Date of publication of application: **05.10.2005**
(21) Application number: 05006271.0
(22) Date of filing: 22.03.2005
(51) Int. Cl.: F16H 9/18

(54) **Belt type continuously variable transmission**

(30) Priority: 31.03.2004 JP 2004105777
(71) Applicant: JATCO Ltd, Shizuoka 417-8585 (JP)
(72) Inventor: Kuroda, Shojiro, Fuji-shi, Shizuoka 417-8585 (JP)
(74) Representative: Grünecker, Kinkeldey, Stockmair & Schwanhäusser Anwaltssozietät

(57) **Abstract**

A belt type continuously variable transmission for an automotive vehicle includes a power transmitting device (33) disposed on a first shaft (A1) coaxial with a power output shaft (32) of an engine. A drive pulley (34) is disposed on the first shaft (A1) and driven by an output power of the power transmitting device (33). A driven pulley (10) is disposed on a second shaft (A2) parallel with the first shaft (A1) and connected to the drive pulley (34) by a belt (38). A parking gear (12b) is formed at the outer peripheral portion of a fixed sheave (12) of the driven pulley (10). Teeth (12b) of the parking gear are located generally the same position as a bearing (4) for the driven pulley in an axial direction of the second shaft (A2).

## Description

### BACKGROUND OF THE INVENTION

This invention relates to improvements in a belt type continuously variable transmission by which the rotational speed of a power output shaft of an engine is changed and transmitted to an axel shaft side in a vehicle, and more particularly to a parking mechanism of the belt type continuously variable transmission which is provided for the vehicle in order to lock rotation on the power output side of the continuously variable transmission at a vehicle parking.

A parking mechanism of a belt type continuously variable transmission is disclosed in Japanese Patent No. 3306217, in which a parking gear is mounted on a driven shaft and located between a driven pulley and a power output gear or adjacent to the power output gear. The power output gear and the like are locked in rotation under the action of a parking pawl which is engaged with the parking gear. The parking pawl is swingably supported by a pin which is fixed to a casing. A return spring is also wound on the pin to return the parking pawl to a lock-releasing position.

Additionally, another parking mechanism of a continuously variable transmission is disclosed in Japanese Patent Laid-open Publication No. 1-283463 wherein a parking gear is formed at an outer peripheral portion of a fixed sheave of a driven pulley of the continuously variable transmission.

However, in the parking mechanism disclosed in Japanese Patent No. 3306217, the parking gear is disposed separate from the driven pulley thereby having a disadvantage that the number of component parts is increased with the parking gear while the size of the mechanism is enlarged in the axial direction. Additionally, the parking gear is disposed to be offset to a bearing of the driven pulley (or the bearing of the driven shaft) in the axial direction so that force applied to the parking gear during a vehicle parking acts on the bearing of the driven pulley as a moment (or axial input). Therefore, there arises a problem that securing durability for this bearing is difficult.

In the parking mechanism disclosed in Japanese Patent Laid-open Publication No. 1-283463, the parking gear is formed on the outer peripheral portion of the fixed sheave of the driven pulley thereby solving the above disadvantage that the number of the component parts is increased with the parking gear while the mechanism is enlarged in size. However, in this parking mechanism, teeth of the parking gear and an engagement pawl are disposed to be offset to the bearing of the driven pulley thereby leaving the problem in durability of the bearing.

### SUMMARY OF THE INVENTION

It is an object of the present invention is to provide an improved belt type continuously variable transmission which can effectively overcome drawbacks encountered in conventional belt type continuously variable transmission of the similar nature.

Another object of the present invention is to provide an improved belt type continuously variable transmission wherein the number of component parts can be reduced by commonly using a part of a parking gear while a bearing of a driven pulley can be improved in durability.

According to the present invention, a belt type continuously variable transmission comprises a power transmitting device disposed on a first shaft coaxial with a power output shaft of an engine to transmit rotation of the power output shaft. A drive pulley is disposed on the first shaft and located at an opposite side of the power transmitting device with respect to the engine. The drive pulley is driven by an output power of the power transmitting device. A driven pulley is disposed on a second shaft parallel with the first shaft. The driven pulley is connected to the drive pulley by a belt. The driven pulley includes a fixed sheave. An output gear is disposed on the second shaft and located at side of the engine respective to the driven pulley so as to be rotatable with the driven pulley as a single member. The parking gear is formed at an outer peripheral portion of the fixed sheave of the driven pulley. Teeth of the parking gear are located generally the same position as a bearing for the driven pulley in an axial direction of the second shaft.

Here, the power transmitting device means a torque converter, an electromagnetic clutch or the like. Additionally, the passage "teeth of the parking gear are located generally the same position as a bearing for the driven pulley in an axial direction of the second shaft" means that at least a part of the teeth of the parking gear axially (or in the axial direction of the second shaft) overlaps at least a part of the bearing of the driven pulley. Furthermore, it is preferable that an axially central point of force applied to the parking gear through the parking pawl is generally in agreement with an axially central point of the bearing.

### BRIEF DESCRIPTION OF THE DRAWINGS

Fig. 1 is a cross-sectional view of an entire configuration of an embodiment of a belt type continuously variable transmission according to the present invention; and
Fig. 2 is an enlarged cross-sectional view of a configuration around a driven pulley of the embodiment of a belt type continuously variable transmission of Fig. 1.

### DETAILED DESCRIPTION OF THE INVENTION

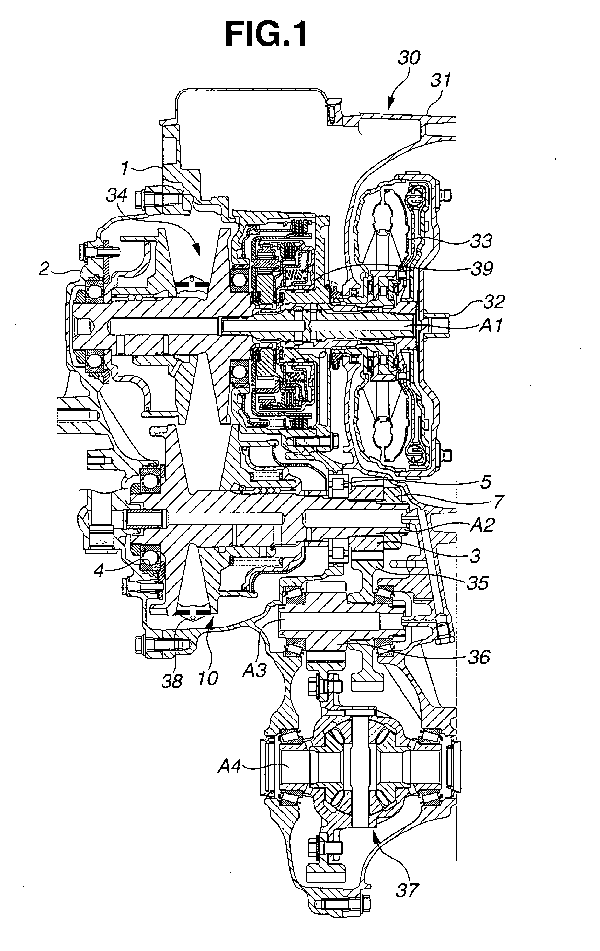

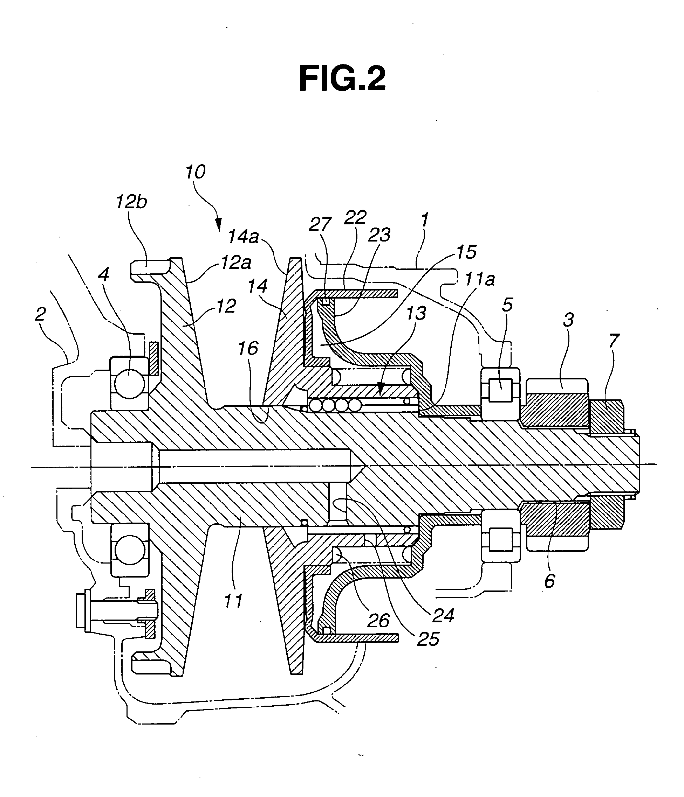

Referring now to Figs. 1 and 2 of the drawing, an embodiment of a belt type continuously variable transmission according to the present invention is illustrated. The belt type continuously variable transmission is for an automotive vehicle and includes a power transmitting device 33 (for example, a torque converter or the like) is disposed on a first shaft A1 coaxial with a power output shaft 32 of an engine so as to transmit rotation of the above output shaft 32. A drive pulley 34 is disposed on the first shaft A1 and located at an opposite side of the above power transmitting device 33 with respect to the engine so as to be driven by an output of the above power transmitting device 33. A driven pulley 10 is disposed on the second shaft A2 parallel with the first shaft A1 and connected with the above drive pulley 34 through a belt 38 such as a V-belt. An output gear 3 is disposed on the second shaft A2 and located on the side of the engine with respect to the driven pulley 10 so as to be rotatable together with the driven pulley 10 as a single member. The second shaft A2 is rotatably supported by bearings 4, 5 which are separate from each other. The bearing (ball bearing) 4 is mounted on an end section of the second shaft A2 while the bearing 5 is mounted on the other end section of the second shaft A2. The bearing 4 is supported on a side cover 2 while the bearing 5 is supported on the casing 1 to which the side cover 2 is fixed. An idler gear 35 is disposed on a third shaft A3 parallel with the second shaft A2 and engaged with the above output gear 3. The final drive gear 36 is disposed on the third shaft A3 and rotatable together with the idler gear 35 as a single member. A differential 37 is disposed on the fourth shaft A4 parallel with the third shaft A3 so as to be driven by the above final drive gear 36.

The power transmitting device 33, the drive pulley 34, the driven pulley 10, the output gear 3, the idler gear 35, the final drive gear 36, and the differential 37 are housed in the above box-like member 30. This box-like member is constituted of the casing 1, the housing 31 fixed to the casing 1 at the side of an engine, and the side cover 2 fixed to the casing 1 at the opposite side to the engine.

Additionally, a forward-reverse changing mechanism 39 is disposed, for example, between the power transmitting device 33 and the drive pulley 34 on the first shaft A1.

In this embodiment, a driven side pulley mechanism has such an arrangement as shown in Fig. 2. More specifically, the pulley mechanism includes the rotational shaft or second shaft A2. A fixed pulley disk 12 (or fixed sheave) is disposed to be fixed or integral with an outer peripheral surface of the second shaft A2 at one end side (left side in Fig. 2). An annular movable pulley disk 14 (or movable sheave) forming part of the driven pulley 10 is disposed on the outer peripheral surface of the second shaft A2 at the other end side (right side in Fig. 2) so that the sheave surface of the movable pulley disk 14 is located facing the fixed pulley disk 12. The movable pulley disk 14 is mounted on the second shaft A2 to be slidable in its axial direction and restricted in rotation by a spline 13 such as a ball spline or the like. A hydraulic fluid chamber 15 is formed to be supplied with hydraulic fluid and located at the rear side (right side in Fig. 2) of the movable pulley disk 14. A seal section 16 is formed to seal a minute clearance between the inner peripheral surface of the movable pulley disk 14 at the sheave surface side and the outer peripheral surface of the second shaft A2 which faces the inner peripheral surface of the movable pulley disk 14. This seal section 16 makes sealing for the hydraulic fluid chamber 15.

An annular cylinder outer peripheral member 22 is fixed to the rear surface of the movable pulley disk 14. An annular cylinder wall member 23 is slidably connected to the cylindrical inner surface of the cylinder outer peripheral member 22. The inner peripheral section of the cylinder wall member 23 is mounted on the second shaft A2 in such a manner as to be held between a first step section 11a of the second shaft A2 and the bearing 5 mounted at the other end side of the second shaft A2 relative to this inner peripheral section. Additionally, the hydraulic fluid chamber 15 discussed above is formed as a space surrounded by the above-discussed cylinder outer peripheral member 22, the cylinder wall member 23, the outer peripheral surface of the second shaft A2, and the like. The hydraulic fluid chamber 15 is such arranged that the hydraulic fluid (usually oil) is supplied to the inside of the whole chamber 15 through a flow passage 24 formed in the second shaft A2 and a flow passage 25 formed in the movable pulley disk 14. A spring 26 (compression coil spring in this case) is loaded between the movable pulley disk 14 and the cylinder wall member 23 in the hydraulic fluid chamber 15 so as to bias the movable pulley disk 14 in a direction to approach the fixed pulley disk 12 (or toward the left side in Fig. 2).

The outer peripheral surface of the cylinder wall member 23 is provided with a seal member 27 thereby sealing a clearance between the outer peripheral surface (or sliding surface) of the cylinder wall member 23 and the cylindrical inner peripheral surface (or sliding surface) of the cylinder outer peripheral member 22.

The power output gear 3 is placed adjacent to the bearing 5 (or at the right side of the bearing 5 in Fig. 2) and mounted on the second shaft A2 to be fixed to the second shaft A2 with a spline 6. The inner peripheral section of the cylinder wall member 23, an inner race of the bearing 5 and the output gear 3 are fixed to the second shaft A2 in such a manner as to be biased to the first step section 11a discussed above by a nut 7 which is threaded on the outer peripheral surface of the second shaft A2 at the other end section (right side in Fig. 2) and screwed in leftward in Fig. 2.

With the above arrangement, in case that the total force of the pressure of the hydraulic fluid and the biasing force of the spring 26 exceeds a reaction force and the like from the belt 38 upon supplying the hydraulic fluid to the hydraulic fluid chamber 15, the movable pulley disk 14 is pushed to the side of the fixed pulley disk 12 (or the left side in Fig. 2) thereby reducing a distance between the sheave surface (inclined or frustoconical surface) 14a of the movable pulley disk 14 and the sheave surface 12a of the fixed pulley disk 12. Consequently, an effective radius of the belt 38 passed on the driven pulley 10 is made larger. In contrast, in case that the total force of the pressure of the hydraulic fluid and the biasing force of the spring 26 decreases below the reaction force and the like from the belt 38, the movable pulley disk 14 is pushed to an opposite side (or the right side in Fig. 2) thereby increasing the distance between the sheave surface 14a of the movable pulley disk 14 and the sheave surface 12a of the fixed pulley disk 12. Consequently, the effective radius of the belt 38 passed on the driven pulley 10 is made smaller. As a result, a continuous speed changing is made possible by installing such a pulley mechanism to input (drive) and output (driven) sides of the continuously variable transmission.

In addition, the fixed pulley disk 12 (or fixed sheave) is formed at its outer peripheral portion with teeth 12b as a parking gear with which an engagement section of a parking pawl (not shown) is engaged so as to achieve lock of rotation during a vehicle parking. More specifically, the parking pawl is kept at an unlock position which is separated from the teeth 12b of the parking gear in a non-parking state (or in a state where a select lever for the transmission is not operated to a parking position). However, in a parking state where the select lever is operated to the parking position, the engagement section of the parking pawl is moved and kept at a lock position to be engaged with the teeth 12b as the parking gear under the action of a parking mechanism (not shown).

In this embodiment, the teeth 12b formed at the outer peripheral portion of the fixed pulley disk 12 (or fixed sheave) as the parking gear are located axially at generally the same position as the bearing 4 which is located at the one end side (left side in Fig. 2) of the second shaft A2 and adjacent to the fixed pulley disk 12. More specifically, the outer peripheral portion of the fixed pulley disk 12 is formed into a cylindrical shape and is axially extended toward the side of the outer peripheral portion of the bearing 4, in which the teeth 12b as the parking gear are formed at this cylindrical outer peripheral portion of the fixed pulley disk 12 as shown in Fig. 2. In other words, the cylindrical outer peripheral portion of the fixed pulley disk 12 axially extends in a direction opposite to the movable pulley disk 14 over an imaginary radial plane (perpendicular to the axis of the second shaft A2) which contains an annular end face (facing the fixed pulley disk 12) of the bearing 4, so that at least an axial part of the outer peripheral portion of the bearing 4 is surrounded by the outer peripheral portion (with the teeth 12b) of the fixed pulley disk 12. As a result, the teeth 12b are located generally at the same position as the bearing 4 in their axial direction.

According to the belt type continuously variable transmission of this embodiment discussed above, the parking gear is formed at the outer peripheral portion of the fixed sheave (or fixed pulley disk) of the driven pulley 10 thereby commonly using component parts of the transmission, thus solving such a problem that the number of component parts is increased with the parking gear while the mechanism is enlarged in size.

Furthermore, since the positional relationship between the teeth 12b as the parking gear and the bearing 4 for the driven pulley is arranged as discussed above, a moment applied to the bearings 4, 5 caused by the force applied to the parking gear during vehicle parking is zero or very slight so that the durability of the bearings 4, 5 can be readily secured.

Although the invention has been described above by reference to a certain embodiment of the invention, the invention is not limited to the embodiment described above. Modifications and variations of the embodiment described above will occur to those skilled in the art, in light of the above teachings. For example, although the embodiment discussed above has been such arranged that the teeth 12b as the parking gear axially overlap with a part of the outer peripheral surface of the bearing 4, the bearing 4 and the teeth 12b may be located in such that axially central positions of them are completely in agreement with each other. Additionally, it is a matter of course that the present invention is not limited to the embodiment described above also in the configuration of the hydraulic fluid chamber and an installation mechanism for the output gear.

## Claims

1. A belt type continuously variable transmission comprising:
a power transmitting device disposed on a first shaft coaxial with a power output shaft of an engine to transmit rotation of the power output shaft;
a drive pulley disposed on the first shaft and located at an opposite side of said power transmitting device with respect to the engine, said drive pulley being driven by an output power of said power transmitting device;
a driven pulley disposed on a second shaft parallel with the first shaft, said driven pulley being connected to said drive pulley by a belt, said driven pulley including a fixed sheave;
an output gear disposed on the second shaft and located at side of the engine relative to said driven pulley so as to be rotatable with said driven pulley as a single member; and
a parking gear formed at an outer peripheral portion of the fixed sheave of said driven pulley, teeth of said parking gear are located generally the same position as a bearing for said driven pulley in an axial direction of said second shaft.

2. A belt type continuously variable transmission as claimed in Claim 1, further comprising a box-like member encasing the power transmitting device, the drive pulley, the driven pulley, and the output gear.

3. A belt type continuously variable transmission as claimed in Claim 1, wherein said bearing is mounted on the second shaft and located at an opposite side of the fixed sheave of said driven pulley so as to be adjacent to the fixed sheave.

4. A belt type continuously variable transmission as claimed in Claim 2, wherein the outer peripheral portion of the fixed sheave of said driven pulley is cylindrical and extends in a direction opposite to the engine side over a radial plane containing an end face of the bearing which end face facing the fixed sheave so that at least a part of said parking gear and at least a part of the bearing axially overlap each other.
